# FASCICULE DE BREVET EUROPEEN

(11) **EP 1 673 976 B1**
(45) Date de publication et mention de la délivrance du brevet: **22.02.2012**
(21) Numéro de dépôt: 05301080.7
(22) Date de dépôt: 20.12.2005
(51) Int. Cl.: A23C 19/05, A01J 25/11

(54) **Procédé par lequel on améliore les rendements de production fromagère et la qualité du fromage produit par la mise en oeuvre d'un refroidissement cryogénique**
Verfahren zum Erhöhen der Ausbeute und Qualität von Käse mittels kryogenen Kühlung
Method to increase the yield and quality of cheese by employing cryogenic cooling

(30) Priorité: 23.12.2004 FR 0453184
(43) Date de publication de la demande: 28.06.2006
(73) Titulaire: L'AIR LIQUIDE, Société Anonyme pour l'Etude et l'Exploitation des Procédés Georges Claude, 75007 Paris (FR)
(72) Inventeur: Breteau, Jérôme, 69007, LYON (FR); Ibarra Dominique, 91190, Gif sur Yvette (FR); Girault, Christel, 78960, Voisins le Bretonneux (FR)
(74) Mandataire: Mellul-Bendelac, Sylvie Lisette

(56) Documents cités:
- EP-A- 1 366 671
- WO-A-92/02125
- GB-A- 930 917
- US-A- 3 966 970
- US-A- 4 206 696
- US-A- 4 735 817
- US-A- 5 480 666
- US-A1- 2002 160 078
- WIGHT B: "Equipping a Cottage Cheese Plant for Efficiency and Productivity" DAIRY FIELD, vol. 164, no. 11, 1981, pages 129-130, XP009051844

## Description

La présente invention concerne le domaine de la fabrication de produits laitiers fermentés de type fromage, affiné ou non affiné, elle s'est attachée à proposer un nouveau procédé permettant d'atteindre des rendements de fabrication supérieurs.

L'invention s'intéresse donc plus précisément aux produits laitiers de type fromages non affinés du genre fromage blanc, fromages frais, faisselles, tel demi-sel ou « petit-suisses », au fromage Cottage.... etc., ainsi qu'aux fromages dits « affinés », que ces produits soient élaborés à partir de lait ou de matières d'origine laitières de toute origine et notamment vache, brebis, chèvre, jument, ...etc...

Rappelons ici en quelques mots que l'affinage représente la dernière étape de la fabrication d'un fromage, l'affinage est une étape de maturation plus ou moins longue, dans des conditions définies de température et d'humidité de l'atmosphère, pendant laquelle ont lieu des réactions biochimiques, enzymatiques ainsi que le développement de la flore de surface. Les fromages « non affinés » sont donc des fromages n'ayant subi aucune étape d'affinage.

On sait que lors de la fabrication de tels fromages, un ratio est tout particulièrement surveillé par les industriels : la quantité de fromage produit à partir d'une quantité initiale donnée de lait (souvent 100 litres ou 100 kilos), en d'autres termes le rendement de la fabrication.

On sait également qu'un tel rendement va varier selon la qualité du lait de départ, qualité qui va notamment dépendre des saisons, en liaison avec l'alimentation des animaux concernés. Malgré cela, le fromager s'attache toujours à produire tout au long de l'année un fromage de qualité constante indépendamment de la matière première.

Des travaux ont par le passé porté sur l'apport d'un refroidissement rapide durant les étapes de lavage/égouttage de cottage cheese. Ainsi le document GB-930 917 a proposé un procédé comprenant une étape de lavage/égouttage d'un caillé qui consiste à convoyer une couche de caillé sur un support d'égouttage de façon à ce qu'il passe dans des bains d'eau froide entrecoupés de phases d'égouttage et éventuellement additionnés de projections d'eau froide. Ce procédé présente l'avantage de refroidir et raffermir rapidement le caillé. Il est ainsi possible de réduire le temps de main d'oeuvre et le temps d'exposition du caillé aux réactions d'oxydation et aux micro-organismes de l'air.

D'autre travaux ont montré que ce type de refroidissement peut également augmenter l'humidité et donc le rendement du caillé (voir l'article paru dans Dairy Field en Novembre 1981 au nom de Bob Wight).

EP 1 366 671 propose le refroidissement rapide du caillé après l'égouttage en utilisant de l'azote liquide.

Un des objectifs de la présente invention est alors de proposer de nouvelles conditions de refroidissement de tels fromages permettant d'améliorer les rendements atteints par rapport aux conditions actuellement pratiquées.

On rappellera que la fabrication de tels fromages suit des procédés extrêmement nombreux et variés (atteignant plusieurs centaines voire milliers de procédés différents), elle comprend en général les étapes suivantes :
- La préparation des laits de fabrication, en général en les stabilisant microbiologiquement (traitement thermique tel pasteurisation ou encore ultrafiltration) et en ajustant leur composition physico-chimique (matières grasses, protéines ...).
- La coagulation qui peut être de trois types : coagulation présure (action dominante de la présure), coagulation lactique (action dominante des ferments) et la coagulation mixte, coagulation qui génère ce que l'on appelle le "caillé".
- L'égouttage, qui est l'étape de concentration des éléments du lait. Les liaisons moléculaires au sein du coagulum provoquent une contraction du réseau qui expulse alors le lactosérum (eau, protéines sériques, lactose, minéraux solubles etc...). Soit l'égouttage a lieu par simple gravité, y compris dans un dispositif autonome de type tunnel, soit il est effectué et accéléré par différentes opérations parmi lesquelles on trouve par exemple la centrifugation, le découpage, le pressage, le retournement, le traitement thermique...
- L'affinage, étape optionnelle, qui est une phase plus ou moins longue de maturation dans des conditions définies de température, d'humidité de l'atmosphère.

Comme on le verra plus en détails ci-dessous, l'apport de la présente invention consiste dans le fait d'ajuster de façon pré-définie une ou plusieurs caractéristiques physico-chimiques du jeune caillé (parmi les caractéristiques suivantes : l'extrait sec total, la teneur en lactose, le pH etc.....) puis de procéder à un refroidissement rapide contrôlé, par voie cryogénique et dans des conditions optimisées, lors de la phase d'égouttage ou juste avant celle-ci, que cette phase d'égouttage ait lieu avant ou après broyage. Comme on le verra également ci-dessous, un refroidissement rapide contrôlé par l'application d'une cinétique de refroidissement pré-définie est un facteur supplémentaire d'ajustement afin de contrôler la qualité finale du produit (extrait sec total, quantité de protéines etc.....) et le gain de rendement.

Comme on le verra également ci-dessous, de telles conditions de fabrication conformes à l'invention permettent d'augmenter le rendement de fabrication du fromage de 3 à 10 points ce qui on le conçoit, pour un industriel, est extrêmement intéressant.

On le verra également, une diminution de température rapide réalisée lors de la phase d'égouttage permet d'autre part de modifier les caractéristiques organoleptiques des fromages ainsi fabriqués, ainsi que leurs propriétés culinaires, telle que le caractère filant du fromage. Les fromages constituent en effet un ingrédient industriel très utilisé dans les produits tels que les plats cuisinés frais ou surgelés par exemple. Leurs aptitudes culinaires, c'est-à-dire leurs propriétés à chaud sont de plus en plus étudiées. Ainsi, le filant correspond à l'aptitude du fromage à former des brins fibreux qui se déforment sous l'effet d'un étirement vertical et forme des « files » plus ou moins long. Cette propriété est également étudiée pour des fromages destinés à être fondu par les consommateurs, comme par exemple le fromage à raclette.

La présente invention concerne alors un procédé de fabrication de fromages, affinés ou non, du type comprenant notamment une étape d'égouttage, et se caractérisant en ce que l'on procède à l'ajustement à un niveau prédéfini d'au moins une des caractéristiques physico-chimiques du caillé, puis, lors ou avant la phase d'égouttage, à un refroidissement additionnel contrôlé qui est réalisé par mise en contact avec un fluide cryogénique.

En effet pour exprimer les potentialités du refroidissement additionnel vis-à-vis du gain de rendement, la Demanderesse a mis en évidence le fait qu'il est par exemple avantageux d'optimiser l'Extrait Sec Total ("EST") du caillé avant égouttage, à savoir obtenir un EST le plus faible possible, et limiter sa prédisposition à une synérèse trop poussée dans les étapes situées en amont de l'égouttage (maturation, coagulation ...). La cinétique d'acidification joue là un rôle crucial. En effet, une acidification rapide entraîne une intensification de l'égouttage en cuve et par là même un EST important avant égouttage.

Selon un des modes de mise en oeuvre de l'invention, le procédé comporte donc un ajustement de l'Extrait Sec Total du caillé se présentant à l'égouttage. On a pu démontrer que ce paramètre est en effet un point très important pour contrôler le gain de rendement souhaité. Diminuer cet EST permet d'améliorer le gain de rendement (comme on le démontrera ci-dessous dans le cadre d'exemples). Pour cela on peut par exemple jouer sur la vitesse d'acidification lors des étapes de maturation et de coagulation.

On conçoit que vue la très grande diversité de fromages et de procédés de fabrication présents sur le marché il soit difficile de donner une gamme d'extrait sec convenant à cette grande diversité.

Néanmoins on se propose selon la présente invention d'adopter avantageusement, pour bon nombre de cas, une valeur d'EST qui soit inférieure de 0.5 à 3 points par rapport à sa valeur habituelle dans le procédé de fabrication considéré, on a pu constater qu'un tel abaissement, dans de telles proportions, donnait des résultats très avantageux en terme de rendement.

Selon un des modes de mise en oeuvre de l'invention, le procédé comporte également un ajustement de la cinétique de refroidissement du jeune caillé. Il ne doit pas être trop rapide de façon à optimiser le gain de rendement espéré. Les paramètres de refroidissement de l'installation de refroidissement selon l'invention, qui est réalisé par apport de froid cryogénique (température de la cellule ou du tunnel, quantité de liquide cryogénique apportée par quantité de caillé, temps d'exposition au froid etc....) sont établies en tenant compte des caractéristiques thermo-physiques du caillé (géométrie, humidité, variation enthalpique, conductibilité thermique, masse volumique ...) afin d'appliquer la cinétique de refroidissement optimale définie.

On peut également s'attacher à ajuster le taux de lactose au moment du délactosage afin d'éviter un pH qui pourrait être trop bas avant l'étape d'affinage de façon à prévenir d'éventuelles dérives de la qualité sensorielle du fromage final. En effet un taux de lactose trop élevé peut entraîner une acidification trop rapide et des défauts organoleptiques.
On sait que le délactosage est une étape qui a lieu après la coagulation et le décaillage, pour certains fromages. On enlève une partie du sérum expulsé et on le remplace par de l'eau (le sérum contenant beaucoup de lactose c'est ainsi une façon d'en enlever). Plus on enlève de sérum et on ajoute d'eau, plus le délactosage est intense.

On pourra donc selon l'invention ajuster le taux de lactose par exemple en jouant sur la composition initiale de la recette ou encore lors du délactosage en jouant sur ratio sérum/eau.

Le procédé selon l'invention peut également adopter l'une ou plusieurs des caractéristiques techniques suivantes :
- ledit refroidissement accéléré permet l'obtention d'un abattement de 8 à 30°C de la température du mélange se présentant à l'étape d'égouttage (on le conçoit, selon notamment que le mélange ait subi ou non avant de se présenter à l'égouttage une étape de chauffage).
- l'étape d'égouttage a lieu avant une étape de broyage.
- l'étape d'égouttage a lieu après une étape de broyage.

D'autres caractéristiques et avantages ressortiront de la description suivante, donnée uniquement à titre d'exemple et faite en référence aux figures annexées sur lesquelles :
- la figure 1 est une représentation schématique d'un exemple d'installation de fabrication de fromages affinés selon l'art antérieur ;
- la figure 2 est une représentation schématique d'une telle installation modifiée permettant la mise en oeuvre de l'invention.
- la figure 3 est une vue en section partielle de l'installation de la figure 2, au niveau du tunnel utilisé pour réaliser l'étape d'égouttage.
- la figure 4 présente une comparaison de deux cinétiques de refroidissement.
- la figure 5 illustre l'influence du niveau d'égouttage sur le gain de rendement; et
- la figure 6 démontre l'influence du refroidissement additionnel sur le critère "filant".

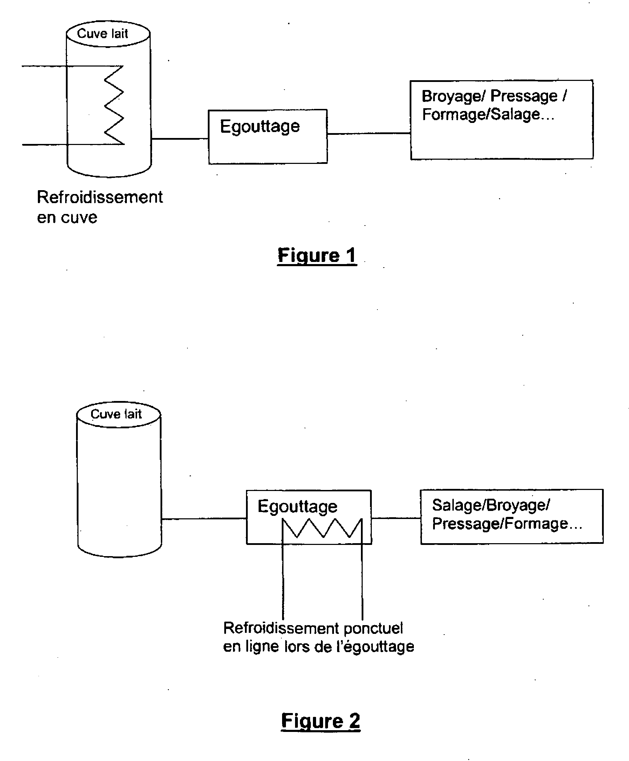

On reconnaît sur la figure 1 une cuve contenant le mélange laitier initial, cuve où sont réalisés tant l'étape de traitement thermique (pasteurisation), le refroidissement -réalisé en cuve par froid mécanique ici jusqu'à une température de 18 à 30°C, et la coagulation.

Le mélange aborde alors l'étape d'égouttage, dans laquelle il perd seulement quelques degrés du à l'échange naturel avec l'atmosphère environnante (pour atteindre une température d'une vingtaine de degrés).

De là, il aborde les étapes ultérieures classiques dans de telles fabrications de fromages, et incluant par exemple une ou plusieurs étapes parmi broyage, pressage, formage, traitement thermique etc...il est à noter que selon les fabrications d'ailleurs, un broyage peut intervenir avant égouttage.

II est à noter également que lors de telles étapes, par exemple de broyage ou pressage, peut se poursuivre le phénomène d'égouttage, même si celui-ci avait été très majoritairement effectué durant l'étape précédente.

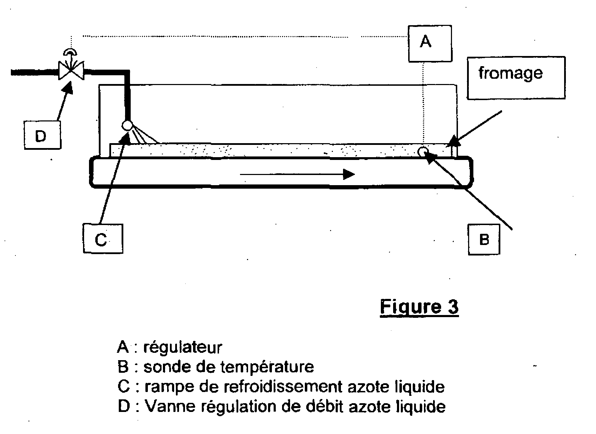

La figure 2 illustre alors un mode de mise en oeuvre de l'invention que l'on peut décrire ainsi :
- on réalise toujours au niveau de la cuve contenant le mélange laitier initial une étape de traitement thermique (pasteurisation), un pré-refroidissement par froid mécanique jusqu'à une température de 24 à 30°C, température à laquelle a lieu la coagulation, au sein de cette même cuve pour cet exemple de réalisation.
- la préparation quitte alors la cuve et aborde l'égouttage. II subit au niveau de l'égouttage, par une mise en oeuvre dont on donnera un exemple ci-dessous dans le cadre de la figure 3, une opération de refroidissement accéléré jusqu'à une température d'environ 16 à 18°C.

La figure 3 permet précisément de mieux visualiser un mode de réalisation d'un tel refroidissement accéléré réalisé au niveau de l'égouttage, qui est effectué dans un tunnel en continu, où circule la préparation se présentant sous la forme d'un « gâteau », on met alors en contact le gâteau défilant avec des buses de projection d'azote liquide, sur tout ou partie de la largeur du convoyeur.

Une telle mise en oeuvre conforme à l'exemple de la figure 3 a permis d'obtenir des gains de rendement voisins de 7 à 10 %.

A titre illustratif, l'installation selon la figure 1 permettait d'obtenir 28 fromages à partir d'une cuve de lait de départ, alors que la mise en oeuvre selon la figure 3 permettait d'atteindre 30 à 31 fromages à partir de la même cuve de lait de départ.

De même, l'analyse sensorielle des lots de fromages ainsi fabriqués, par un panel d'analyse, a démontré que le goût de ces fromages était plus « typés » et plus prononcés en comparaison des arômes développés par les fromages produits par ce même site de façon traditionnelle.

On peut également signaler que l'on a observé sur les lots traités selon l'invention le fait que la coupe des fromages était plus aisée, mieux reproductible, et générant moins de rebuts.

On va maintenant décrire dans ce qui suit des exemples illustrant les avantages obtenus grâce à l'ajustement à un niveau prédéfini d'au moins une des caractéristiques physico-chimiques du caillé.

### Exemple 1 :

Des fromages à pâte pressée non cuite de 2kg (50% d'extrait sec total, 50% de gras sur sec) ont été fabriqués à partir d'une cuve de 100 litres. Les étapes de fabrication était les suivantes : pré-maturation, maturation, coagulation, décaillage, 1^{er} brassage, délactosage, 2^{ème} brassage, désérumage (élimination de serum), pré-pressage pressage, salage, affinage. Le pain de caillé obtenu après pré-pressage a été séparé en 2 lots de 3 fromages chacun :
- le premier lot a subi le cycle de pressage classique,
- le second lot a subi une opération de refroidissement cyrogénique en fin de pré-pressage.

Ledit refroidissement a été effectué dans une mini-cellule Silversas (commercialisée par la société KELOX) dans laquelle ont été installées des buses supplémentaires pour projeter le fluide cryogénique sur les fromages. De l'azote liquide a ainsi été pulvérisé pour abaisser la température à coeur des fromages de 9°C (température initiale : 35°C, température finale 26°C).

Des différences de rendements bruts ont été observées entre les fromages témoins et les fromages essais. 12kg de fromage ont été obtenus pour 100kg de lait pour les conditions témoin contre 13kg/100kg pour les conditions essai. L'augmentation de rendement a donc été de 8,3%. Mais les rendements corrigés à 51 % d'extrait sec total montrent également une différence qui persiste (11,98kg/100kg pour les témoins contre 12,41kg/100kg pour les essais soit +3,6%). Ces résultats démontrent que le refroidissement appliqué n'a pas simplement retenu davantage d'eau : d'autres matières telles que matières grasses et lactose ont également été davantage retenues dans le caillé.

### Exemple 2

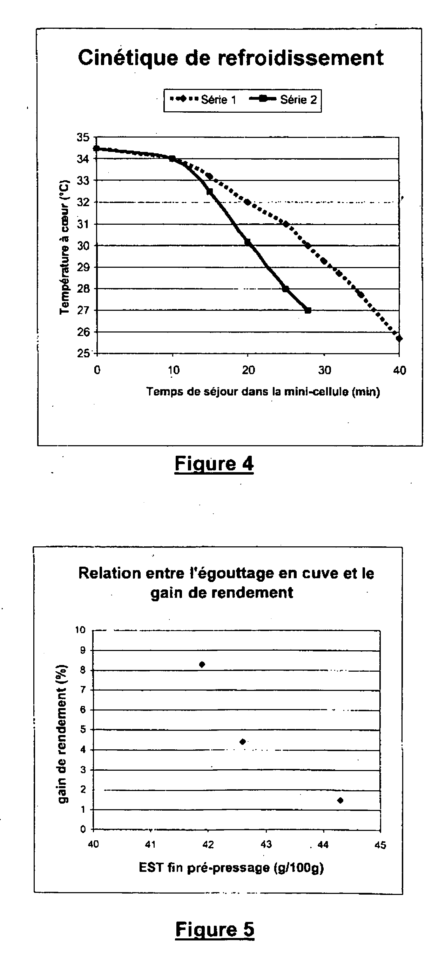

Deux séries de fromages ont été fabriquées de la façon décrite dans l'exemple 1. Elles ont subies des cinétiques de refroidissement différentes telles que montrées dans la figure 4. Chaque courbe présente la moyenne de descente en température de trois fromages.

Les résultats ont montré que la cinétique de refroidissement influence grandement le gain de rendement. Le rendement brut de la série 1 a été augmenté de 8% contre 4,4% pour la série 2. Le protocole de refroidissement de la série 1 a également permis une homogénéisation plus rapide des températures à coeur et en périphérie des fromages pendant l'étape de pressage.

### Exemple 3

Trois séries de fromages ont été fabriquées de la façon décrite dans l'exemple 1. Chaque série présentait un niveau d'extrait sec différent en fin de pré-pressage et donc avant l'étape de refroidissement additionnel.

On a fait varié cet extrait sec en faisant varier la vitesse d'acidification pendant la coagulation et donc l'intensité d'égouttage en cuve.

La figure 5 fait le parallèle entre le niveau d'égouttage en cuve (extrait sec du caillé en fin de pré-pressage) et le gain de rendement généré par le refroidissement cryogénique. Les résultats montrent que le gain de rendement obtenu avec un refroidissement additionnel est d'autant plus grand que le niveau d'égouttage en cuve est faible.

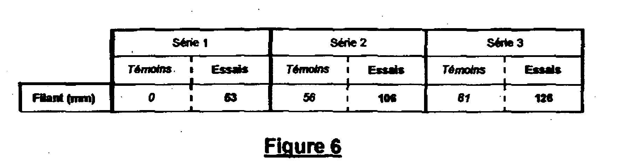

Par ailleurs le caractère filant des fromages a été évalué par un test de traction verticale réalisé à l'aide d'un mobile-harpon placé dans le fromage fondu à 70°C. La hauteur du mobile lors de la rupture du dernier fil formé était mesurée (en mm) et représente la propriété filante du fromage. Deux mesures ont été faites sur chaque fromage. Les résultats sont présentés en figure 6. On observe sur tous les essais une augmentation significative du caractère filant des fromages. En effet, alors que les témoins présentent en moyenne une valeur de filant de 46mm, les essais ayant subi le refroidissement additionnel ont des valeurs qui ont en moyenne 49mm de plus que ces témoins.

## Revendications

1. Procédé de fabrication de fromages, affinés ou non, du type comprenant notamment une étape de coagulation générant un caillé, ainsi qu'une étape d'égouttage et **se caractérisant en ce que** l'on procède, à l'ajustement à un niveau prédéfini d'au moins une des caractéristiques physico-chimiques du caillé, puis, lors ou avant la phase d'égouttage, à un refroidissement additionnel contrôlé qui est réalisé par mise en contact avec un fluide cryogénique.

2. Procédé de fabrication de fromages selon la revendication 1 **caractérisé en ce que** l'une des caractéristiques physico-chimiques du caillé ajustées est l'Extrait Sec Total du caillé se présentant à l'égouttage.

3. Procédé de fabrication de fromages selon la revendication 2 **caractérisé en ce que** l'ajustement de l'Extrait Sec Total du caillé est effectué en jouant sur la vitesse d'acidification lors des étapes de maturation et/ou de coagulation intervenant dans la fabrication.

4. Procédé de fabrication de fromages selon l'une des revendications précédentes, **caractérisé en ce que** lors dudit refroidissement additionnel contrôlé on fixe la cinétique de refroidissement du caillé à un niveau prédéfini.

5. Procédé de fabrication de fromages selon la revendication 1, **caractérisé en ce que** l'une des caractéristiques physico-chimiques du caillé ajustées est le taux de lactose au moment du délactosage.

6. Procédé de fabrication de fromages selon l'une des revendications précédentes **caractérisé en ce que** ladite mise en contact est effectuée par projection du fluide cryogénique sur le mélange.

7. Procédé de fabrication de fromages selon l'une des revendications précédentes **caractérisé en ce que** ledit refroidissement permet l'obtention d'un abattement de 8 à 30°C de la température du mélange.

8. Procédé de fabrication de fromages selon l'une des revendications précédentes, **caractérisé en ce que** l'étape d'égouttage a lieu avant une étape de broyage.

9. Procédé de fabrication de fromages selon l'une des revendications 1 à 7, **caractérisé en ce que** l'étape d'égouttage a lieu après une étape de broyage.

## Claims

1. Method for producing cheeses, matured or non-matured, of the type comprising in particular a coagulation step producing a curd, and a draining step and being **characterised in that** at least one of the physicochemical features of the curd is adjusted to a predefined level, then, during or before the draining phase, additional controlled cooling is carried out by contacting with a cryogenic fluid.

2. Method for producing cheeses according to claim 1, **characterised in that** one of the adjusted physicochemical features of the curd is the total solids of the curd at the draining step.

3. Method for producing cheeses according to claim 2, **characterised in that** the total solids of the curd is adjusted by modifying the rate of acidification during the steps of maturing and/or coagulation which take place during production.

4. Method for producing cheeses according to any one of the preceding claims, **characterised in that** during said additional controlled cooling the cooling kinetics of the curd is fixed at a predefined level.

5. Method for producing cheeses according to claim 1, **characterised in that** one of the adjusted physicochemical features of the curd is the lactose content at the time of lactose removal.

6. Method for producing cheeses according to any one of the preceding claims, **characterised in that** said contacting is carried out by spraying cryogenic fluid onto the mixture.

7. Method for producing cheeses according to any one of the preceding claims, **characterised in that** said cooling makes it possible to reduce the temperature of the mixture by 8 to 30 °C.

8. Method for producing cheeses according to any one of the preceding claims, **characterised in that** the draining step takes place before a grinding step.

9. Method for producing cheeses according to any one of claims 1 to 7, **characterised in that** the draining step takes place after the grinding step.

## Patentansprüche

1. Verfahren zur Herstellung von gereiftem oder ungereiftem Käse, vom Typ umfassend einen Schritt der Koagulation zur Erzeugung von geronnener Milch sowie einen Schritt der Entwässerung und **dadurch gekennzeichnet, dass** eine Einstellung mindestens einer der physikalisch-chemischen Eigenschaften der geronnenen Milch auf ein vorab festgelegtes Niveau und anschließend, bei oder vor der Entwässerungsphase, eine zusätzliche kontrollierte Kühlung vorgenommen wird, die durch Kontaktherstellung mit einem kryogenen Fluid realisiert wird.

2. Verfahren zur Herstellung von Käse nach Anspruch 1, **dadurch gekennzeichnet, dass** eine der physikalisch-chemischen Eigenschaften der geronnenen Milch die Gesamttrockenmasse der geronnenen Milch ist, die nach der Entwässerung vorliegt.

3. Verfahren zur Herstellung von Käse nach Anspruch 2, **dadurch gekennzeichnet, dass** die Einstellung der Gesamttrockenmasse **dadurch** erfolgt, dass die Ansäuerungsgeschwindigkeit bei den Schritten der Reifung und/oder Koagulation, die bei der Herstellung stattfinden, verändert wird.

4. Verfahren zur Herstellung von Käse nach einem der vorhergehenden Ansprüche, **dadurch gekennzeichnet, dass** bei der zusätzlichen kontrollierten Kühlung die Kühlungskinetik der geronnenen Milch auf ein vorab festgelegtes Niveau festgelegt wird.

5. Verfahren zur Herstellung von Käse nach Anspruch 1, **dadurch gekennzeichnet, dass** eine der physikalisch-chemischen Eigenschaften der geronnenen Milch der Anteil an Laktose zum Zeitpunkt der Entfernung der Laktose ist.

6. Verfahren zur Herstellung von Käse nach einem der vorhergehenden Ansprüche, **dadurch gekennzeichnet, dass** die Kontaktherstellung durch Besprühen des Gemischs mit dem kryogenen Fluid erfolgt.

7. Verfahren zur Herstellung von Käse nach einem der vorhergehenden Ansprüche, **dadurch gekennzeichnet, dass** die Kühlung es ermöglicht, die Temperatur des Gemischs um 8 bis 30 °C zu senken.

8. Verfahren zur Herstellung von Käse nach einem der vorhergehenden Ansprüche, **dadurch gekennzeichnet, dass** der Schritt der Entwässerung vor einem Schritt der Zerkleinerung erfolgt.

9. Verfahren zur Herstellung von Käse nach einem der Ansprüche 1 bis 7, **dadurch gekennzeichnet, dass** der Schritt der Entwässerung nach einem Schritt der Zerkleinerung erfolgt.
